# EUROPÄISCHE PATENTANMELDUNG

(11) **EP 4 822 530 A1**
(43) Veröffentlichungstag der Anmeldung: **14.10.2026**
(21) Anmeldenummer: 25170077.9
(22) Anmeldetag: 11.04.2025
(51) Int. Cl.: G06F 9/50, G06F 9/455

(54) **SYSTEM UND COMPUTER-IMPLEMENTIERTES VERFAHREN ZUR DYNAMISCHEN DATENMIGRATION AUF UNTERSCHIEDLICHE PERSISTENTE SPEICHERTYPEN FÜR CONTAINER-IMPLEMENTIERTEN ANWENDUNG**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Computer-implementiertes Verfahren zur dynamischen Datenmigration auf unterschiedliche persistente Speichertypen (ST), die einer Container-implementierten Anwendung zugewiesen sind, umfassend die Schritte:
- Übermitteln (S1) eines Anforderungsprofils (20) für einen persistenten Speicher für die Anwendung von einer zentralen Verwaltungsvorrichtung (30) an eine Laufzeitumgebung (39) der Anwendung, wobei das Anforderungsprofil (20) jeder unterschiedlichen Auslastungsmetrik (AM) einen unterschiedlichen Speichertyp (ST)
- zuordnet, und jede Auslastungsmetrik (AM) durch einen Wertebereich für mindestens einen Nutzungsparameter (NP) der Anwendung vorgegeben ist,
- Einrichten (S2) eines ersten Speichertyps (ST) entsprechend dem Anforderungsprofil (20) der Anwendung,
- Überwachen (S3) des mindestens einen Nutzungsparameters (NP) während der Laufzeit der Anwendung, und
- Migrieren (S4) des ersten Speichertyps auf einen zweiten Speichertyp, wenn mindestens einer der überwachten Nutzungsparameter (NP) den in der Auslastungsmetrik (AM) des ersten Speichertyps vorgegebenen Wertebereich verlässt und alle Nutzungsparameter (NP) eine Auslastungsmetrik (AM) des zweiten Speichertyps erfüllen.

## Beschreibung

### Technisches Gebiet

Die Erfindung betrifft ein Computer-implementiertes Verfahren zur dynamischen Datenmigration auf unterschiedliche persistente Speichertypen, die einer Container-implementierten Anwendung zugewiesen sind, sowie eine entsprechende Anordnung und ein Computerprogrammprodukt.

### Technischer Hintergrund

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardware-Ressourcen des darunterliegenden Systems zugewiesen bekommen und über einen eigenen Betriebssystemkern verfügen, eine ressourcenschonende Art der Virtualisierung dar und kapseln eine in einem Container betriebene Softwarekomponente vom darunterliegenden Gastrechner ab.

Um einen Container auf dem Gastrechner starten zu können, wird aus einem Containerimage mit Hilfe einer Deployment-Konfiguration, im Weiteren auch als Bereitstellungsinformation bezeichnet, auf dem Gastrechner eine Containerinstanz erstellt und auf der Laufzeitumgebung des Gastrechners ausgeführt. Die Deployment-Konfiguration stellt eine Instanziierungsinformation für das Container-Image dar. Innerhalb Deployment-Konfiguration werden auch Ressourcen der darunterliegenden Ausführungsumgebung zugewiesen. Eine Deployment-Konfiguration sind beispielsweise eine Docker-compose-Datei oder ein Kubernetes Manifest. Eine orchestrierte Laufzeitumgebung umfasst einen Orchestrator (z.B. eine Kubernetes Control Plane), bevorzugt ausgebildet durch eine Orchestrierungssoftware, die auf einem Computer ausgeführt wird, und mindestens einen Gastrechner, häufig eine Vielzahl von Gastrechnern, die dem Orchestrator zugeordnet sind. Orchestrator und der mindestens eine orchestrierte Gastrechner bilden ein Cluster. Der Orchestrator startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloud-basierte Container-as-a-Services-Umgebungen oder in einer Cloud betriebene virtuelle Instanzen als Knoten einer orchestrierten Laufzeitumgebung verwalten.

Containerinstanzen kommunizieren über eine von der Container-Laufzeitumgebung zugewiesene Netzwerkschnittstelle zu anderen Containerinstanzen, die lokal auf dem gleichen darunterliegenden Gastrechner, auch als Host bzw. Knoten bezeichnet, betrieben werden. Weiterhin wird die Netzwerkschnittstelle verwendet, um zu Containerinstanzen auf anderen Knoten oder zu externen Diensten, außerhalb der gegebenenfalls orchestrierten Laufzeitumgebung zu kommunizieren. Die Kommunikation erfolgt hierbei üblicherweise über IP-Adressen, welche dynamisch von der Container-Laufzeitumgebung und/oder dem Orchestrator verwaltet werden und den Instanzen beim Start zugewiesen werden.

Container-implementierte Anwendungen, synonym auch Applikationen genannt, erfordern zum Speichern von Daten persistente Speicherbereiche, welche in irgendeiner Form auf dem darunterliegenden Gerät bereitgestellt werden und beim Start einer Container-Instanz von der Container-Laufzeitumgebung, im Weiteren kurz als Laufzeitumgebung bezeichnet, dieser zugewiesen werden. Unter einem persistenten Speicher versteht man einen Speicher, der Daten auch dann noch behalten kann, wenn die Stromversorgung unterbrochen wird. Im Gegensatz zum flüchtigen Arbeitsspeicher (RAM), der seine Inhalte verliert, sobald der Strom abgeschaltet wird, können Daten in einem persistenten Speicher dauerhaft gespeichert werden.

Unabhängig davon, ob eine Container-Laufzeitumgebung orchestriert ist oder nicht, verfügen unterschiedliche Speichertypen und -klassen über unterschiedliche Eigenschaften. Abhängig vom Typ des Speichermediums können beispielsweise unterschiedliche Antwortzeiten beim Lesen und Schreiben verfügbar sein. Unterschiedliche Speichertypen sind beispielsweise Solid-State-Disks (SSD), Festplatten, sogenannte Harddisk. Diese können in Kombination mit dem Betriebsmodus, beispielsweise gespiegelt oder nicht gespiegelt unterschiedliche Speichertypen definieren.

Solid-State-Disks (SSD) sind beispielsweise besonders bei Lese- und Schreib-Aktionen performanter als Festplatten (HD). Gleiches gilt auch für Netzwerk-Speicher, welcher beispielsweise über ein internet Small Computer System Interface (iSCSI), Storage Area Network-Technologien (SAN) oder Netzwerkprotokolle wie Network Filesystem (NFS) bereitgestellt wird.

Ähnlich ist die Situation, sofern Container-Laufzeitumgebungen, die innerhalb einer Cloud-Umgebung betrieben werden. Hier werden unterschiedliche Klassen von Speichern angeboten, die in unterschiedlichen Qualitätsstufen zu unterschiedlichen Kosten bereitgestellt werden. Beispielsweise werden innerhalb der gleichen Speicherklasse unterschiedliche Geschwindigkeiten angeboten.

Weiterhin können zusätzlich persistente Speicherbereiche beispielsweise durch interne RAID-Systeme oder aber durch Aufsetzen gespiegelter Dateisystemschichten gegen den Ausfall eines Speichermediums geschützt werden und somit hochverfügbar gemacht werden. Die Bereitstellung eines hochverfügbaren Dateisystems hat jedoch den Nachteil, dass durch die Bereitstellung der Hochverfügbarkeit nicht die volle Speicherkapazität bereitgestellt werden kann.

Zum Zeitpunkt der Auslieferung eines Gastrechner verwendeten Geräts ist nicht immer bekannt, welche Klassen von Applikationen auf dem Gastrechner in welcher Zusammensetzung betrieben werden und welche Persistenz in Bezug auf Verfügbarkeit und Ein-/Ausgabe-Anforderungen die jeweiligen Applikationen auf dem Gerät besitzen. Welche Ein-/Ausgabe - Anforderungen erforderlich sind, ist hierbei auch von der von der Applikation erzeugten Last abhängig, welche nutzer- bzw. geräteabhängig sein kann und sich über die Laufzeit der auf dem Gerät betriebenen Applikation verändern kann.

Bei einer geringeren Last kann hierdurch beispielsweise auch ein kostengünstiger Speichertyp oder eine kostengünstigere Qualitätsstufe des gleichen Speichertyps verwendet werden, sodass nur in Überlastsituationen eine performantere und technisch aufwändigere Lösung bereitgestellt werden müsste.

### Zusammenfassung der Erfindung

Es ist somit die Aufgabe der vorliegenden Erfindung einen einer Applikation zugeordneten persistenten Speicherbereich während der Laufzeit abhängig von der aktuellen Auslastung der Applikation und der erforderlichen Performanz der Applikation dynamisch anzupassen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Computer-implementiertes Verfahren zur dynamischen Datenmigration auf unterschiedliche persistente Speichertypen, die einer Container-implementierten Anwendung zugewiesen sind, umfassend die Schritte:
- Übermitteln eines Anforderungsprofils für einen persistenten Speicher für die Anwendung von einer zentralen Verwaltungsvorrichtung an die Laufzeitumgebung der Anwendung, wobei das Anforderungsprofil jeder unterschiedlichen Auslastungsmetrik einen unterschiedlichen Speichertyp zuordnet, und jede Auslastungsmetrik durch einen Wertebereich für mindestens eines Nutzungsparameters der Anwendung vorgegeben ist,
- Einrichten eines ersten Speichertyps entsprechend dem Anforderungsprofil der Anwendung,
- Überwachen des mindestens einen Nutzungsparameters während der Laufzeit der Anwendung, und
- Migrieren des ersten Speichertyps auf einen zweiten Speichertyp, wenn mindestens einer der überwachten Nutzungsparameter, den in der Auslastungsmetrik des ersten Speichertyps vorgegebenen Wertebereich verlässt und alle Nutzungsparameter eine Auslastungsmetrik des zweiten Speichertyps erfüllen.

Somit wird dynamisch überprüft, ob der für eine Anwendung zugewiesene persistente Speichertyp bezüglich einem vorgegebenen Anforderungsprofil, das beispielsweise eine Performanz vorgibt, für die derzeitige Last ausreichend ist. Ist dies nicht der Fall, wird auf einen passenden Speichertyp migriert. Durch die kontinuierliche Überwachung der Nutzungsparameter kann nicht nur auf einen Speichertyp mit höherer Performanz migriert werden, sondern auch eine Rückverlagerung, also Migration auf einen weniger performanten, günstigeren Speichertyp, durchgeführt werden.

Ein zweiter Aspekt der Erfindung betrifft ein System umfassend eine zentrale Verwaltungsvorrichtung, ein Cluster von Laufzeitumgebungen, die durch die zentrale Verwaltungsvorrichtung verwaltet werden, die derart ausgebildet sind die Schritte des oben genannten Verfahrens durchzuführen.

Ein dritter Aspekt der Erfindung betrifft ein Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des oben genannten Verfahrens durchzuführen.

### Ausgestaltungen der Erfindung

In einer vorteilhaften Ausführungsform ist für jeden Speichertyp mindestens einer der folgenden Werte vorgegeben: eine Mindestgröße des Speichers beim Einrichten des Speichertyps und/oder eine Mindestgröße an freiem Speicher nach dem Start der Anwendung und/oder eine Mindestgröße an freiem Speicher während der Laufzeit der Anwendung, und wobei bei Unterschreiten einer der Mindestgrößen die Speichergröße erweitert wird.

Somit können Mindestanforderungen an den Speichertyp gestellt werden und gleichzeitig die tatsächlich allokierte Speichergröße variabel zu belassen.

In einer vorteilhaften Ausführungsform gibt der Wertebereich für den mindestens einen Nutzungsparameter der Auslastungsmetrik eine Performanz der Anwendung oder eine Ausfallsicherheit der Anwendung vor.

Somit kann der der Anwendung zugeordnete Speicher an die Hauptkriterien für die Akzeptanz und Zuverlässigkeit der Anwendung angepasst werden. Nutzungsparameter sind beispielsweise eine Antwortzeit auf eine Anfrage an die Anwendung, verfügbare Bandbreite zur Übertragung von Daten zwischen Nutzer und Anwendung.

In einer vorteilhaften Ausführungsform ist jeder Auslastungsmetrik mindestens eine unterschiedliche Speicherklasse, bevorzugt bei der Entwicklung der Anwendung, zugeordnet.

Somit kann eine für die Anwendung geeignete Speicherklasse eine für die Anwendung geeigneter Speichertyp bereits beim Starten der Anwendung zugeordnet werden. Beispiele für unterschiedliche Speichertypen sind Festkörperlaufwerke, auch Solid State Disks (SDD) genannt, oder Festplatten (HDD), die mit unterschiedliche Antwortzeiten jeweils unterschiedliche Speicherklassen bilden.

Dadurch können Migrationsvorgänge während der Laufzeit, insbesondere direkt nach dem Starten der Anwendung eingespart und somit der Speicherverwaltungsaufwand verringert werden.

In einer vorteilhaften Ausführungsform wird von einer Speicherverwaltungseinheit, die der zentralen Verwaltungseinheit zugeordnet ist, für ein Cluster von verwalteten Laufzeitumgebungen eine Mindestkapazität und eine Maximalkapazität für die jeweilige Speicherklasse/Speichertyp vorgegeben wird.

Dadurch werden innerhalb eines Clusters die gleichen Speicherklassen/Speichertypen konfiguriert und verringern den Verwaltungsaufwand für die verschiedenen Laufzeitumgebungen im Cluster und erleichtern das Starten der Anwendung auf unterschiedlichen Laufzeitumgebungen im Cluster.

In einer vorteilhaften Ausführungsform erzeugt die Speicherverwaltungseinheit eine Speicherkonfiguration der Speichertypen entsprechend dem Anforderungsprofil und weist ein Speichervolumen entsprechend dem ersten Speichertyp der Laufzeitumgebung zu.

Dies verringert den Konfigurationsaufwand beim Starten der Anwendung und ermöglicht eine kürzere Bereitstellungszeit der Anwendung.

In einer vorteilhaften Ausführungsform ist das Speichervolumen lokal auf der Laufzeitumgebung oder in einem von der Laufzeitumgebung abgesetzten Speicherpool ausgebildet.

Somit ist das Verfahren flexibel auf lokale als auch Cloud-basierte Speichermedien anwendbar.

In einer vorteilhaften Ausführungsform wird die Auslastungsmetrik während der Laufzeit der Anwendung verändert, bevorzugt verfeinert.

Somit kann die Auslastungsmetrik und die entsprechenden Speicherklassen/Speichertypen an die Gegebenheiten auf der Laufzeitumgebung sowie an die Lastverhältnisse angepasst werden.

In einer vorteilhaften Ausführungsform überprüft die Speicherverwaltungseinheit die überwachten Nutzungsparameter gegenüber den Auslastungsmetriken der Speichertypen im Anforderungsprofil, und leitet bei Bedarf das Migrieren auf einen ermittelten neuen Speichertyp ein.

Die Speicherverwaltungseinheit ist der Verwaltungsvorrichtung zugeordnet und kann somit neben lokal auf der Laufzeitumgebung bereitgestellten Speichermedien auch Speichermedien auf einem Cloud-Umgebung steuern. Somit stellt die ein Steuern de Migration durch die Speicherverwaltungseinheit flexibel.

In einer vorteilhaften Ausführungsform wird der neue Speichertyp bereitgestellt und nach einer vollständigen Synchronisierung der Daten wird die Zuordnung des vorhandene Speichertyp aufgelöst
Somit wird eine hohe Ausfallsicherheit und ein reibungsloser Betrieb der Anwendung während der Migration zwischen Speichertypen gewährleistet.

In einer vorteilhaften Ausführungsform wird das Speichervolumen um zusätzliches Speichervolumen erweitert, bis das erweiterte Speichervolumen dem Speichervolumen des neuen Speichertyps entspricht.

Somit wird ein Umkopieren der Daten vermieden und somit Prozessorkapazität eingespart.

In einer vorteilhaften Ausführungsform werden die Nutzungsparameter mittels einer direkten Anfrage bei der Laufzeitumgebung oder mittels einer Anfrage bei der zentralen Verwaltungseinheit durch die Speicherverwaltungseinheit überwacht.

Dies ermöglicht eine Migration von Speichermedien sowohl lokal auf der Laufzeitumgebung als auch auf einer Cloud-Speicher-Umgebung.

In einer vorteilhaften Ausführungsform werden die Nutzungsparameter kontinuierlich überwacht und entsprechend dem Anforderungsprofil wird vom aktuellen Speichertyp auf einen neuen Speichertyp mit geringerer Speichergröße oder auf einen neuen Speichertyp mit höherer Speichergröße als der aktuelle Speichertyp migriert.

Dies erlaubt eine Migration des Speichertyps nicht nur auf einen neuen Speichertyp mit höheren Performance- bzw. Ausfallsicherheitswerten, sondern auch ein "Zurückfallen" auf Speichertypen mit geringeren Performance- bzw. Ausfallsicherheitswerten.

### Exemplarische Ausführungsbeispiele der Zeichnung

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine erstes Ausführungsbeispiel des erfindungsgemäßen Verfahrens als Ablaufdiagramm;
- Fig. 2: ein Ausführungsbeispiel eines Anforderungsprofils in schematischer Darstellung;
- Fig. 3: eine Ausführungsbeispiel des erfindungsgemäßen Systems in schematischer Darstellung; und
- Fig. 4: ein zweites Ausführungsbeispiel des erfindungsgemäßen Verfahrens als Sequenzdiagramm.

Einander entsprechende Teile sind in allen Figuren mit den gleichen Bezugszeichen versehen.

Sofern es in der nachfolgenden Beschreibung nicht anders angegeben ist, beziehen sich die Begriffe "übermitteln", "überwachen", "einrichten", "migrieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Die Anordnung und darin optional enthaltene Komponenten, wie beispielsweise ein Gastrechner bzw. die auf dem Gastrechner implementierte Container-Laufzeitumgebung, die Verwaltungsvorrichtung, und dergleichen umfassen einen oder mehrere Prozessoren. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Verfahrensschritte bzw. Funktionalitäten können durch eine Kombination aus Hardware, Firmware und Software realisiert sein. Alle Verfahrensschritte werden durch eine oder mehrere Komponenten der Anordnung ausgeführt. Entsprechend sind alle Verfahrensschritte des beschriebenen Verfahrens als in der Anordnung enthaltene Funktionalitäten anzusehen.

### Detaillierte Beschreibung der Ausführungsbeispiele

Unabhängig vom grammatikalischen Geschlecht eines bestimmten Begriffes sind Personen mit männlicher, weiblicher oder anderer Geschlechteridentität mit umfasst.

Die grundlegende Idee des hier beschriebenen Verfahrens besteht darin, dass für eine container-implementierte Anwendung in einem Anforderungsprofil beschrieben wird, welche Anforderungen an persistente Speicherbereiche in Bezug auf Ausfallsicherheit und Performanz bestehen. Ein entsprechender Speichertyp wird dynamisch durch eine zentrale Verwaltungsvorrichtung initial bereitgestellt und bei Überschreitung entsprechender Nutzungsparameter der Anwendung auf performantere oder weniger performantere persistente Speichertypen migriert. Für unterschiedliche Auslastungsmetriken können durch den Applikationsentwickler mehrere unterschiedliche Anforderungen an Speicherklassen definiert werden. Angenommen wird hierbei, dass diese sich nicht widersprechen oder entsprechende first- oder best-match Verfahren innerhalb eine Speicher-Managers gewählt werden.

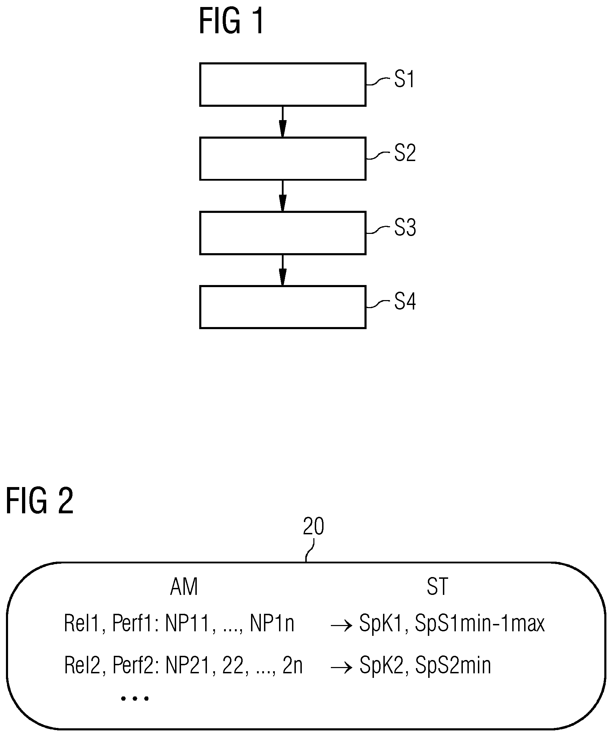

Fig. 1 zeigt ein Beispiel eines solches Anforderungsprofils 30 für eine Anwendung. Um die geforderte Ausfallsicherheit Rel1 und Performanz Perf1 zu gewährleisten wird eine Auslastungsmetrik AM durch eine Mehrzahl von Nutzungsparametern NP11, ...., NP1n vorgegeben. Beispiele für Nutzungsparameter NP sind eine Anzahl von Anfragen an die Anwendung während eines Zeitintervalls, eine Datenmenge an abgerufenen Daten pro Anfrage, ein Antwortzeit zwischen Anfrage und Antwort der Anwendung auf die Anfrage und dergleichen. Für jeden Nutzungsparameter eines Sets von Nutzungsparametern wird ein Wertebereiche definiert und diesem Set ein Speichertyp zugeordnet. Der Speichertyp umfasst Angaben zur Art des Speichermediums SpK sowie optional Angaben zur Speichergröße SpS und weiteren Performanz-relevanten Angaben. Beispielsweise gibt das Anforderungsprofil Antwortzeiten des Speichertyps beim Lesen und Schreiben sowie die Auslastungsmetrik. Eine Auslastungsmetrik ist beispielsweise ein Eingabe-Ausgabe-Wartestatus für den zugeordneten Speicherbereich. In einer Variante ist die Antwortzeit der Anwendung in Abhängigkeit der eingehenden Anfragen eine Auslastungsmetrik. Dies wird durch entsprechend durchgeführte "Probes" beispielsweise durch die zentrale Verwaltungsvorrichtung überprüft.

Anhand von Fig.2 werden der Ablauf des Verfahrens zur dynamischen Datenmigration auf unterschiedliche persistente Speichertypen, die einer Container-implementierten Anwendung zugewiesen sind, beschrieben. Der Speichertyp bezeichnet eine Speicherklasse mit spezifischen Parametern. Ein Speichertyp ist beispielsweise ein Netzwerkspeicher, SDD-Speicher, HD-Speicher, und dergleichen. Eine Speicherklasse ist innerhalb des Speichertyps eine Klasse mit unterschiedlichen Eigenschaften wie beispielsweise Blockgröße, Antwortzeit.

Im ersten Schritt S1, wir das Anforderungsprofil für einen persistenten Speicher für die Anwendung von einer zentralen Verwaltungsvorrichtung an eine Laufzeitumgebung der Anwendung übermittelt. Das Anforderungsprofil ordnet jeder unterschiedlichen Auslastungsmetrik einen unterschiedlichen Speichertyp zu. Jede Auslastungsmetrik ist durch einen Wertebereich für mindestens einen Nutzungsparameter der Anwendung vorgegeben, siehe Fig.1.

Anschließend wird ein erster Speichertyp entsprechend dem Anforderungsprofil der Anwendung eingerichtet, siehe S2. Während der Laufzeit der Anwendung wird der mindestens ein Nutzungsparameter überwacht, siehe S3. Die Überwachung wird beispielsweise kontinuierlich oder in regelmäßigen Zeitintervallen durchgeführt.

Verlässt mindestens einer der überwachten Nutzungsparameter den in der Auslastungsmetrik des ersten Speichertyps für ihn vorgegebenen Wertebereich, wird auf einen zweiten Speichertyp migriert, siehe S4. Der zweite Speichertyp wird derart gewählt, dass alle aktuell ermittelten Nutzungsparameter eine Auslastungsmetrik des zweiten Speichertyps erfüllen.

Bevorzugt wird im Anforderungsprofil 30, siehe auch Fig.1, für jeden Speichertyp mindestens einer der folgenden Werte vorgegeben ist: eine Mindestgröße des Speichers beim Einrichten des Speichertyps ST und/oder eine Mindestgröße an freiem Speicher nach dem Start der Anwendung und/oder eine Mindestgröße an freiem Speicher während der Laufzeit der Anwendung, und wobei bei Unterschreiten einer der Mindest-größen die Speichergröße erweitert wird. Die Auslastungsmetrik AM und der zugeordnete Wertebereich für den mindestens einen Nutzungsparameter NP11,..,NP1n geben eine Performanz der Anwendung oder eine Ausfallsicherheit der Anwendung vor.

Bevorzugterweise wird bereits bei der Entwicklung der Anwendung mindestens eine unterschiedliche Speicherklasse SpK1, SpK2 der Auslastungsmetrik AM zugeordnet.

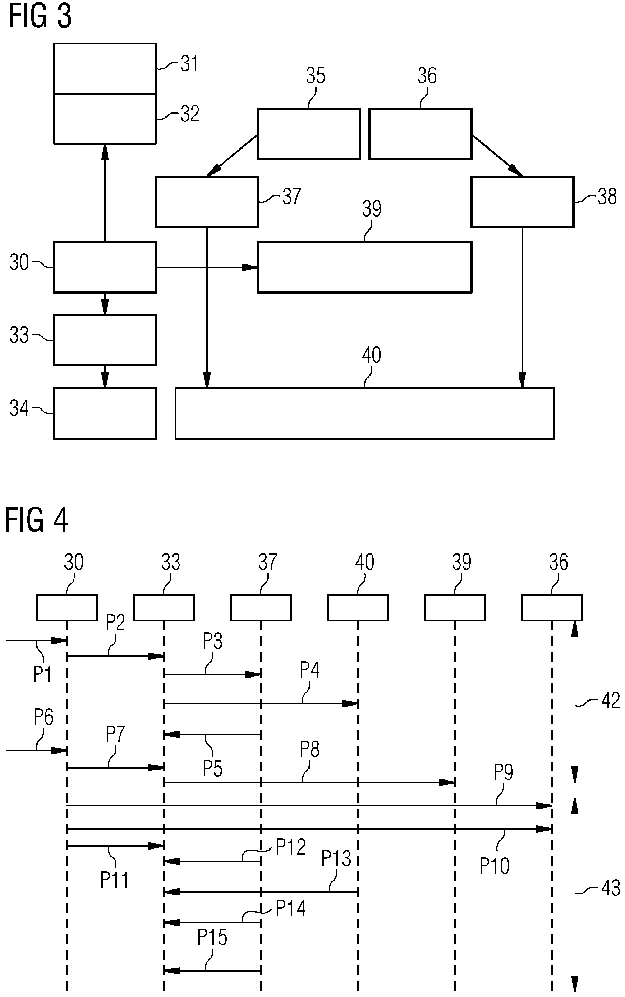

Fig. 3 zeigt ein Ausführungsbeispiel einer Anordnung, die derart ausgebildet ist, das beschriebene Verfahren auszuführen. Die Anordnung umfasst eine zentrale Verwaltungsvorrichtung 30 und ein Cluster von mindestens einer Container-Laufzeitumgebung 39, das durch die zentrale Verwaltungsvorrichtung 30 verwaltet wird. Auf der Container-Laufzeitumgebung, kurz als Laufzeitumgebung bezeichnet, wird eine oder mehrere Containerinstanzen 35, 36 gestartet und ausgeführt. Jeder Containerinstanz 35, 36 ist ein Speichertyp 37, 38 entsprechend einem Anforderungsprofil 31 der Anwendung zugewiesen. Der Speichertyp 37, 38 wird durch Speichervolumen bereitgestellt, das lokal auf der Laufzeitumgebung bzw. dem Gastrechners ausgebildet und/oder durch einen abgesetzten Speicherpool bspw. einer Cloud-Speicherumgebung ausgebildet

Der zentralen Verwaltungsvorrichtung 30 ist eine Speicherverwaltungseinheit 33 zugeordnet. Die Speicherverwaltungseinheit 33 gibt eine Mindestkapazität und eine Maximalkapazität für die jeweilige Speicherklasse für das Cluster von verwalteten Laufzeitumgebungen 39 vor. Die Speicherverwaltungseinheit 33 erzeugt eine Speicherkonfiguration 34 der Speichertypen entsprechend dem Anforderungsprofil und weist der Laufzeitumgebung 39 ein Speichervolumen entsprechend dem ersten Speichertyp zu.

In der Speicherkonfiguration 34 wird für die jeweilige Speicherklasse die Mindest- und Maximalkapazität definiert. Diese kann im Falle von Kubernetes durch die Referenzierung von Pod-Labels oder Namensräumen auch für einzelne Kubernetes-Namensräume beschrieben werden. Die Speicherverwaltungseinheit 33 kann beispielsweise als Erweiterung, bspw. als Kubernetes CustomResource, innerhalb eines Kubernetes-Clusters betrieben werden.

Die Speicherverwaltungseinheit 33 überprüft die überwachten Nutzungsparameter gegenüber den Auslastungsmetriken der Speichertypen im Anforderungsprofil, und leitetbei Bedarf das Migriren auf einen ermittelten neuen Speichertyp ein.

Das Migrieren von eine aktuell eingerichteten Speichertyp auf einen neuen Speichertyp wird bevorzugt durch Spiegeln, auch als Mirroring bezeichnet, des Speichers durchgeführt. Unter Spiegeln eines persistenten Speicherbereichs versteht man die redundante Speicherung von Daten auf zwei oder mehr unabhängigen Speichermedien. Beim Spiegeln werden die Daten zeitgleich und identisch auf mehrere physische Speichervolumen geschrieben. Dadurch entsteht eine vollständige Kopie der Daten auf jedem Spiegel, d.h. jedem Speichervolumen. Wenn ein Speichermedium ausfällt, können die Daten weiterhin vom anderen Spiegel abgerufen werden. Dies erhöht die Ausfallsicherheit und Resilienz des Gesamtsystems. Die Leistung des Speichers wird erhöht, indem Lese-Zugriffe parallel auf die Spiegel erfolgen, was die Zugriffszeiten reduziert. Schreib-Zugriffe werden auf alle Spiegel synchron durchgeführt. Bevorzugt sind die Spiegel physisch getrennt und unabhängig voneinander ausgebildet, um Ausfallrisiken zu minimieren.

In Fig. 4 wird nun ein Ausführungsbeispiel für ein Erzeugen 42 eines Speichertyps und die Migration 43 von einem aktuellen Speichertyp auf einen neuen Speichertyp dargestellt.

Wird eine Anforderungsprofil zum Starten einer Anwendung an eine zentrale Verwaltungsvorrichtung 30 übergeben, siehe P, so wird dort zunächst überprüft, ob ein entsprechender Speichertyp und die hinterlegten Auslastungsmetriken korrekt in der Speicherverwaltungseinheit 33 hinterlegt sind, siehe P2. Existiert der persistente Speicherbereich noch nicht, wird dieser in Form eines leeren Speichervolumens 37 erzeugt, siehe P3.

Ein Speichervolumen bezeichnet einen logischen Bereich auf einem persistenten Speichermedium, der für die Datenspeicherung genutzt wird. Einige Beispiele für Speichervolumen sind Partitionen auf einer Festplatte, logische Laufwerke auf einem RAID-System, virtuelle Datenträger in einer Virtualisierungsumgebung oder auch Volumes in einem Netzwerkspeichersystem. Das Speichervolumen stellt den Anwendern und Betriebssystemen einen klar abgegrenzten Bereich für die Datenhaltung zur Verfügung. Durch die Aufteilung in mehrere Volumes lassen sich Daten strukturiert und organisiert speichern.

Im nächsten Schritt P4 wird das Speichervolumen 37 durch Speicherverwaltungseinheit 33 mit den entsprechenden Speichermedien ausgestattet. Im Falle einer cloud-basierten Speicherumgebung wird das Speichervolumen von einem Cloud-Metadatendienst angefordert und aus einem Speicherpool 40 bereitgestellt. Das Speichervolumen kann auch lokal auf dem Gastrechner bereitgestellt werden, siehe P5, auf dem die Anwendung in einer Containerinstanz auf einer Laufzeitumgebung ausgeführt wird.

Können durch Beschränkungen oder mangels Verfügbarkeit von Speicherbereichen im Cloud-Metadatendienst oder auf dem Gastrechner selbst die entsprechenden Speichermedien nicht bereitgestellt werden, wird eine Fehlermeldung erzeugt. Diese wird von der Speicherverwaltungseinheit 33 auch zentrale Verwaltungsvorrichtung 30 zurückgeben.

Optional werden die persistenten Speichermedien innerhalb der entsprechenden Speicherklasse lokal auf dem Cluster gespiegelt, oder die persistenten Speichermedien wurden bereits vom Speicherpool-Provider oder dem darunterliegenden Gastrechner bereits gespiegelt. Angenommen wird hierbei, dass der Speicherverwaltungseinheit 33 entsprechende, bereits von anderen Komponenten zur Verfügung gestellten Hochverfügbarkeitseigenschaften wohlbekannt sind.

Der darunterliegende persistente Speicherbereich wird vom Speicherpool-Provider oder vom darunterliegenden Gastrechner in der von der Speicherverwaltungseinheit 33 spezifizierten Größe erzeugt. Anschließend wird persistente Speicherbereich in das leere Speichervolumen eingehängt. Sofern durch das Speichervolumen die Spiegelung durchgeführt werden muss, wird zusätzlich auf die gleiche Art und Weise ein weiteres Speichervolumen eingehängt.

Wird in der zentralen Verwaltungsvorrichtung 30 eine Bereitstellungskonfiguration empfangen, siehe P6, und eine Containerinstanz 36 auf der Laufzeitumgebung 39 gestartet, welche das Volume referenziert. Die Anforderungen an das Speichervolumen für die Ausführungsumgebung wird von der zentralen Verwaltungsvorrichtung 30 an die Speicherverwaltungseinheit 33 weitergegeben, siehe P7. Hierbei können die in dem Speichervolumen spezifizierten Auslastungsmetriken weiter verfeinert werden. Innerhalb der einer Richtlinie in der Speicherverwaltungseinheit 33 kann spezifiziert werden, welche Metriken im Container zusätzlich definiert werden können, und ob die Metriken des Speichervolumens verfeinert, werden dürfen oder ausschließlich die Metriken des Speichervolumens gelten. Die Speicherverwaltungseinheit 33 fordert das Speichervolumen bei der Laufzeitumgebung 39 an, siehe P8.

Anschließend wird die Container-Instanz gestartet und das Speichervolumen der Containerinstanz 36 zugeordnet, siehe P9. Gleichzeitig erfolgt durch Speicherverwaltungseinheit 33 bzw. die zentrale Verwaltungsvorrichtung 30 die Auslastungsüberwachung der Containerinstanz 36 mit Hilfe geeigneter Maßnahmen. Diese kann beispielsweise mit Hilfe entsprechender embedded Berkeley Packet Filter (eBPF)-Programme auf dem Gastrechner der Laufzeitumgebung 39 durchgeführt werden oder aber durch periodisches Abfragen der zentrale Verwaltungsvorrichtung 30 auf die Containerinstanzen selbst durchgeführt werden. Abfragen werden bspw. mittels sogenannter "Probes" durchgeführt, die auch als Diagnosemechanismus verwendet werden, Auch eine Kombination ist möglich. Die Auslastungsfunktionen werden durch die im Anforderungsprofil definierten Metriken entsprechend parametriert.

Wird beim Überwachen der Nutzungsparameter ein Verlassen, beispielsweise eine Über- oder Unterschreitung eines Wertebereichs festgestellt, wird ein Alarm erzeugt, und dieser zunächst an die zentrale Verwaltungsvorrichtung 30 und über diesen an die Speicherverwaltungseinheit 33 weitergeleitet, siehe P11.

Die Speicherverwaltungseinheit 33 wertet die für die Instanz gelieferten Metriken aus und vergleicht sie mit den in dem Anforderungsprofil definierten Metriken, siehe P12.

Einzelne Metriken können auch kombiniert werden. Beispielsweise kann somit definiert werden, dass bei einer bestimmten Speichergröße und einer bestimmten Antwortzeit der Containerinstanz 36 auf einen bestimmten Container-Probe ein schnellerer persistenter Speicherbereich gewählt werden muss oder auch einzelne IO-Wait-Werte zusätzlich mit der Speichergröße korreliert werden.

Wird durch die Speicherverwaltungseinheit 33 der Bedarf einer Migration auf beispielsweise einen schnelleren Speicherbereich ermittelt, leitet dieser die Migration ein, siehe P13. Wie bereits bei der oben beschriebenen initialen Einrichtung werden hierfür vom Speicherpool-Provider oder vom darunterliegenden Gastrechner Speichervolumen der entsprechenden Speichertyp angefordert. Zur Migration werden diese zunächst temporär in einen Spiegel eingehängt, siehe P14. Es wird hierbei abgewartet, bis die Spiegelung vollständig abgeschlossen ist. Anschließend werden die persistenten Speicherbereiche der alten Speichervolumen aus dem Spiegel ausgehängt, sodass das Speichervolumen ausschließlich auf den angepassten persistenten Speicherbereichen betrieben wird, siehe P15.

Eine Rückverlagerung findet analog statt. Um ständige Migrationen zu verhindern, kann auch für das Volume definiert werden, dass z.B. erst nach drei aufeinanderfolgenden Alarmen eine Migration ausgeführt wird.

Neben der Migration auf andere persistente Speichertypen kann auch zusätzlich definiert werden, dass die Speichervolumen für Container zur Laufzeit dynamisch erweitert werden. Dies kann durch Hinzufügen größerer persistenter Speicherbereiche zum Spiegel erfolgen oder aber durch entsprechende Funktionalitäten eines Speichervolumen-Managers durch Hinzufügen weiterer persistenter Speicherbereiche bereitgestellt werden.

Wird eine gewisse Auslastung unterschritten, kann das Speichervolumen ebenfalls aufgrund entsprechend definierter Auslastungsmetriken durch die Speicherverwaltungseinheit 33 im laufenden Betrieb verkleinert werden.

Durch das Verfahren ist zusätzlich sichergestellt, dass einzelne Containerinstanzen auf logisch getrennten Speicherbereichen interagieren und durch Allokation von Speicherbereichen auf einem anderen Speichervolumen dieses keine Auswirkungen auf andere Instanzen hat.

Können durch den Speicherpool-Provider oder auf dem darunterliegenden Gastrechner keine entsprechenden persistenten Speicherbereiche allokiert werden, erfolgt keine Migration. Stattdessen sendet die Speicherverwaltungseinheit 33 eine Fehlermeldung bzw. erzeugt einen Alarm. Zusätzlich kann in einer Konfiguration der Speicherverwaltungseinheit 33 noch definiert werden, dass unabhängig von den z.B. vom Speicherpool-Provider bereitstellbaren persistente Speicherbereiche, z.B. innerhalb einzelner Namespaces, gewisse persistente Speicherbereiche beschränkt werden. Hierdurch wird sichergestellt, dass beispielsweise ein Administrator der zentralen Verwaltungseinheit 30 definierte Kostenlimits eingehalten werden.

Vorteilhafterweise werden die persistenten Speicherbereiche nicht f wie bei einem bei Kubernetes bekannten Container Storage Interface CSI, von der darunterliegenden Betriebssystem oder der Cloud-Infrastruktur bezogen, sondern dynamisch von der zentralen Verwaltungsvorrichtung angefordert.

Die Migration auf andere Speicherklassen und Typen erfolgt durch Aufsetzen eines temporären Spiegels, der nach Abschluss der Synchronisation aufgelöst wird. In der Konfigurationsdatei der Speicherverwaltungseinheit können entsprechende Grenzwerte für einzelne Speicherklassen definiert werden, sodass beispielsweise beim Cloud-Provider nicht beliebig viele, gegebenenfalls teure Speicher angefordert werden.

Sind Kapazitätsbeschränkungen erreicht, kann definiert werden, dass z.B. die Migration auf einen anderen Speichertyp nicht erfolgt und eine entsprechende Warnung ausgegeben werden. Das Verfahren kann auch verwendet werden, um in einer orchestrierten Umgebung persistente Speicherbereiche zu vergrößern oder zu verkleinern.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computer-implementiertes Verfahren zur dynamischen Datenmigration auf unterschiedliche persistente Speichertypen (ST), die einer Container-implementierten Anwendung zugewiesen sind, umfassend die Schritte:
- Übermitteln (S1) eines Anforderungsprofils (20) für einen persistenten Speicher für die Anwendung von einer zentralen Verwaltungsvorrichtung (30) an eine Laufzeitumgebung (39) der Anwendung, wobei das Anforderungsprofil (20) jeder unterschiedlichen Auslastungsmetrik (AM) einen unterschiedlichen Speichertyp (ST) zuordnet, und jede Auslastungsmetrik (AM) durch einen Wertebereich für mindestens einen Nutzungsparameter (NP) der Anwendung vorgegeben ist,
- Einrichten (S2) eines ersten Speichertyps (ST) entsprechend dem Anforderungsprofil (20) der Anwendung,
- Überwachen (S3) des mindestens einen Nutzungsparameters (NP) während der Laufzeit der Anwendung, und
- Migrieren (S4) des ersten Speichertyps auf einen zweiten Speichertyp, wenn mindestens einer der überwachten Nutzungsparameter (NP) den in der Auslastungsmetrik (AM) des ersten Speichertyps vorgegebenen Wertebereich verlässt und alle Nutzungsparameter (NP) eine Auslastungsmetrik (AM) des zweiten Speichertyps erfüllen.

2. Computer-implementiertes Verfahren nach Anspruch 1, wobei für jeden Speichertyp (ST) mindestens einer der folgenden Werte vorgegeben ist: eine Mindestgröße des Speichers beim Einrichten des Speichertyps (ST) und/oder eine Mindestgröße an freiem Speicher nach dem Start der Anwendung und/oder eine Mindestgröße an freiem Speicher während der Laufzeit der Anwendung, und wobei bei Unterschreiten einer der Mindestgrößen die Speichergröße erweitert wird.

3. Computer-implementiertes Verfahren nach einem der vorangehenden Ansprüche, wobei der Wertebereich für den mindestens einen Nutzungsparameter (NP) der Auslastungsmetrik (AM) eine Performanz der Anwendung oder eine Ausfallsicherheit der Anwendung vorgibt.

4. Computer-implementiertes Verfahren nach einem der vorangehenden Ansprüche, wobei jeder Auslastungsmetrik (AM) mindestens eine unterschiedliche Speicherklasse, bevorzugt bei der Entwicklung der Anwendung, zugeordnet ist.

5. Computer-implementiertes Verfahren nach einem der vorangehenden Ansprüche, wobei von einer der zentralen Verwaltungseinheit (30) zugeordneten Speicherverwaltungseinheit (33) für ein Cluster von verwalteten Laufzeitumgebungen (39) eine Mindestkapazität und eine Maximalkapazität für die jeweilige Speicherklasse vorgegeben wird.

6. Computer-implementiertes Verfahren nach Anspruch 5, wobei die Speicherverwaltungseinheit (33) eine Speicherkonfiguration der Speichertypen entsprechend dem Anforderungsprofil (20) erzeugt und ein Speichervolumen entsprechend dem ersten Speichertyp der Laufzeitumgebung (39) zuweist.

7. Computer-implementiertes Verfahren nach Anspruch 6, wobei das Speichervolumen lokal auf der Laufzeitumgebung (39) oder in einem von der Laufzeitumgebung (39) abgesetzten Speicherpool (40) ausgebildet ist.

8. Computer-implementiertes Verfahren nach einem der vorangehenden Ansprüche, wobei die Auslastungsmetrik (AM) während der Laufzeit der Anwendung verändert, bevorzugt verfeinert werden.

9. Computer-implementiertes Verfahren nach einem der Ansprüche 5 - 8, wobei die Speicherverwaltungseinheit (33) die überwachten Nutzungsparameter (NP) gegenüber den Auslastungsmetriken (AM) der Speichertypen (ST) im Anforderungsprofil (20) überprüft, und bei Bedarf das Migrieren auf einen ermittelten neuen Speichertyp (ST) einleitet.

10. Computer-implementiertes Verfahren nach Anspruch 9, wobei der neue Speichertyp bereitgestellt wird und nach einer vollständigen Synchronisierung der Daten die Zuordnung des vorhandene Speichertyp aufgelöst wird.

11. Computer-implementiertes Verfahren nach Anspruch 9, wobei das Speichervolumen um zusätzliches Speichervolumen erweitert wird, bis das erweiterte Speichervolumen dem Speichervolumen des neuen Speichertyps entspricht.

12. Computer-implementiertes Verfahren nach einem der Ansprüche 5 - 11, wobei die Nutzungsparameter (NP) mittels einer direkten Anfrage bei der Laufzeitumgebung (39) oder mittels einer Anfrage bei der zentralen Verwaltungseinheit (30) durch die Speicherverwaltungseinheit (33) überwacht werden.

13. Computer-implementiertes Verfahren nach einem der Ansprüche 5 - 12, wobei die Nutzungsparameter (NP) kontinuierlich überwacht werden und entsprechend dem Anforderungsprofil (20) vom aktuellen Speichertyp auf einen neuen Speichertyp mit geringerer Speichergröße oder auf einen neuen Speichertyp mit höherer Speichergröße als der aktuelle Speichertyp migriert wird.

14. Anordnung umfassend eine zentrale Verwaltungsvorrichtung (30), ein Cluster von Laufzeitumgebungen (39), die durch die zentrale Verwaltungsvorrichtung (30) verwaltet werden, die derart ausgebildet sind folgende Schritte auszuführen:
- Übermitteln eines Anforderungsprofils (20) für einen persistenten Speicher für die Anwendung von einer zentrale Verwaltungsvorrichtung (30) an die Laufzeitumgebung (39) der Anwendung, wobei das Anforderungsprofil (20) jeder unterschiedlichen Auslastungsmetrik (AM) einen unterschiedlichen Speichertyp (ST) zuordnet, und jede Auslastungsmetrik (AM) durch einen Wertebereich für mindestens eines Nutzungsparameters (NP) der Anwendung vorgegeben ist,
- Einrichten eines ersten Speichertyps entsprechend dem Anforderungsprofil (20) der Anwendung,
- Überwachen des mindestens einen Nutzungsparameters (NP) während der Laufzeit der Anwendung, und
- Migrieren des ersten Speichertyps auf einen zweiten Speichertyp, wenn mindestens einer der überwachten Nutzungsparameter (NP), den in der Auslastungsmetrik (AM) des ersten Speichertyps vorgegebenen Wertebereich verlässt und alle Nutzungsparameter (NP) eine Auslastungsmetrik des zweiten Speichertyps erfüllen.

15. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens nach einem der Ansprüche 1 - 13 durchzuführen.
